# FASCICULE DE BREVET EUROPEEN

(11) **EP 3 288 881 B1**
(45) Date de publication et mention de la délivrance du brevet: **23.10.2019**
(21) Numéro de dépôt: 16722324.7
(22) Date de dépôt: 29.04.2016
(51) Int. Cl.: B65H 54/34, B65H 75/14, B65H 75/28, G02B 6/44, B65H 65/00, B65H 54/547

(54) **DISPOSITIF ET PROCEDE D'ENROULEMENT D'UNE SUR-LONGUEUR DE FIBRE OPTIQUE SUR UNE BOBINE**
VORRICHTUNG UND VERFAHREN ZUM WICKELN EINER ÜBERLÄNGE EINER GLASFASER AUF EINE SPULE
DEVICE AND METHOD FOR WINDING AN EXCESS LENGTH OF AN OPTICAL FIBER ONTO A BOBBIN

(30) Priorité: 29.04.2015 FR 1553843
(43) Date de publication de la demande: 07.03.2018
(73) Titulaire: Conductix Wampfler France, 92700 Colombes (FR)
(72) Inventeur: GRILLET, Michel, 73330 DOMESSIN (FR)
(74) Mandataire: Regimbeau
(86) Numéro de dépôt international: PCT/FR2016/051011
(87) Numéro de publication internationale: WO 2016/174368

(56) Documents cités:
- FR-A1- 2 766 807
- GB-A- 866 403
- JP-A- H08 327 831
- JP-A- 2015 010 031
- US-A- 5 931 408

## Description

### DOMAINE DE L'INVENTION

La présente invention concerne un dispositif et un procédé d'enroulement d'une sur-longueur de fibre optique sur une bobine, ainsi qu'une bobine adaptée à un tel procédé d'enroulement.

### ARRIERE PLAN DE L'INVENTION

A l'issue de la fabrication d'une fibre optique, une certaine longueur de ladite fibre est enroulée sur une bobine en vue de son stockage et de son transport vers un lieu d'utilisation. Cette longueur est typiquement de l'ordre de quelques kilomètres.

En vue de pouvoir tester un échantillon de la fibre optique de ladite bobine, il est connu d'enrouler une sur-longueur de fibre optique sur un magasin dédié agencé dans la bobine. Cette sur-longueur correspondant à une portion de la fibre optique enroulée en premier sur la bobine, un tel magasin permet de rendre cette sur-longueur accessible après l'enroulement de la totalité de la fibre.

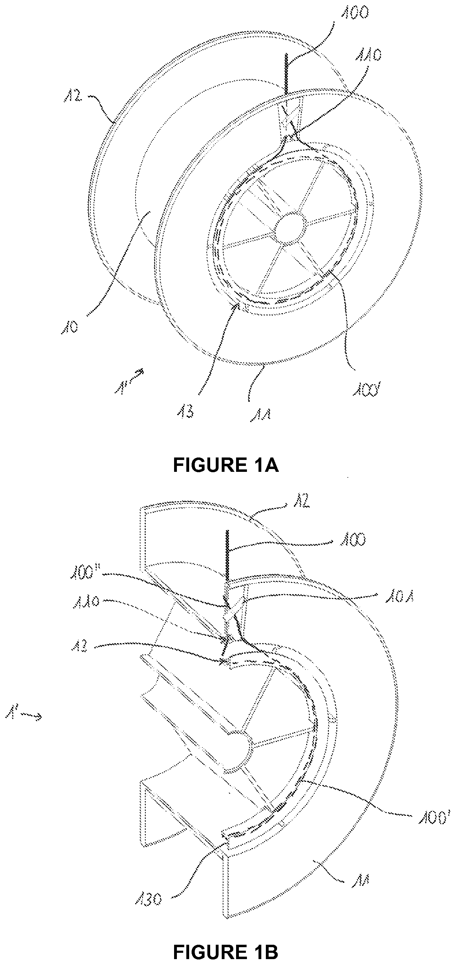

La figure 1A est une vue en perspective d'une bobine 1' de type connu comprenant un tel magasin.

La bobine 1' comprend un fût 10 cylindrique destinée à recevoir la fibre optique, et deux flasques 11, 12 qui s'étendent radialement à chaque extrémité du fût 10 afin de retenir axialement la fibre optique enroulée sur le fût.

L'un des deux flasques (en l'occurrence le flasque 11) est pourvu d'un orifice 110 de passage de la fibre optique 100.

Ledit flasque 11 sépare le fût 10 d'un magasin 13 cylindrique qui est destiné à recevoir une sur-longueur 100' de fibre optique.

Comme on le voit mieux sur la figure 1B, le flasque présente un rebord 130 circonférentiel pour retenir axialement la sur-longueur 100' de fibre optique enroulée sur le magasin.

Pour enrouler une sur-longueur 100' de fibre optique sur le magasin, un opérateur fait passer une portion 100' de fibre optique de la longueur souhaitée au travers de l'orifice de passage 110 (du fût vers le magasin) puis enroule manuellement cette portion de fibre optique sur le magasin 13, derrière le rebord circonférentiel 130. Ensuite, pour éviter tout déroulement intempestif de la fibre optique, il fixe l'extrémité 100" de celle-ci sur le flasque 11 au moyen d'un adhésif 101.

Cette opération manuelle est longue et coûteuse.

Le document JP 2015-010031 divulgue un procédé pour enrouler de manière automatique une sur-longueur de fibre optique sur le magasin d'une bobine, selon le préambule de la revendication 10, ainsi qu'un dispositif d'enroulement correspondant selon le préambule de la revendication 1 et une bobine correspondante selon le préambule de la revendication 5. A cet effet, la bobine est pourvue d'une plaque amovible qui s'engage sur le rebord circonférentiel du magasin de sorte à coincer l'extrémité libre de la fibre optique avant l'enroulement de celle-ci sur le magasin.

Toutefois, ce procédé présente l'inconvénient que l'extrémité libre de la fibre optique se trouve du côté intérieur de l'enroulement (c'est-à-dire proche de la surface cylindrique), de sorte que le déroulement ultérieur d'une partie de ladite sur-longueur est difficile à mettre en oeuvre sans endommager la fibre optique. En outre, il nécessite d'ajouter une pièce supplémentaire à la bobine pour coincer l'extrémité libre de la fibre optique.

### BREVE DESCRIPTION DE L'INVENTION

Un but de l'invention est donc de concevoir une bobine destinée à l'enroulement d'une fibre optique qui permette d'enrouler automatiquement la sur-longueur souhaitée et de maintenir ladite sur-longueur en place sans qu'une opération manuelle ne soit nécessaire. Un autre but de l'invention est de concevoir un dispositif et un procédé permettant d'enrouler automatiquement une sur-longueur de fibre optique sur une telle bobine. En particulier, l'invention doit procurer un accès aisé à la sur-longueur de fibre optique, permettant d'en dérouler une portion pour une utilisation ultérieure sans exercer d'effort susceptible d'endommager la fibre optique.

Conformément à l'invention, il est proposé une bobine selon la revendication 5 destinée à l'enroulement d'une fibre optique, comprenant :
- un fût cylindrique destiné à recevoir la fibre optique,
- deux flasques s'étendant radialement à chaque extrémité du fût, l'un des flasques étant pourvu d'un orifice de passage de la fibre optique,
- un magasin présentant une surface cylindrique destinée à recevoir un enroulement d'une sur-longueur de fibre optique, ledit magasin étant séparé du fût par le flasque pourvu de l'orifice de passage et présentant un rebord circonférentiel de retenue de ladite sur-longueur de fibre optique,
ladite bobine étant caractérisée en ce que ledit rebord circonférentiel présente une ouverture et en ce que le magasin présente une nervure s'étendant radialement sur une partie de la circonférence de la surface cylindrique et située axialement en retrait de l'ouverture, c'est à dire du côté de l'intérieur de la bobine, et partiellement en regard de ladite ouverture, de sorte à maintenir une spire de la sur-longueur de fibre optique entre le rebord circonférentiel et la nervure.

La distance entre le rebord circonférentiel et la nervure est typiquement comprise entre 100 µm et 400 µm.

Selon un mode de réalisation, le magasin est distinct du fût et solidaire dudit fût.

De manière alternative, l'ensemble du fût, des flasques et du magasin est constitué d'une seule pièce.

Selon une forme d'exécution, la bobine comprend une fibre optique enroulée sur le fût et une sur-longueur de ladite fibre optique enroulée sur le magasin, l'extrémité de ladite sur-longueur s'étendant entre la nervure et le rebord circonférentiel et débouchant par l'ouverture.

Un autre objet de l'invention concerne, comme décrit dans la revendication 1, un dispositif d'enroulement d'une sur-longueur de fibre optique sur une bobine telle que décrite plus haut, caractérisé en ce qu'il comprend :
- un moyen d'accumulation de ladite sur-longueur de fibre optique dans une région située du côté du flasque pourvu de l'orifice de passage opposé au fût,
- un moyen d'enroulement de ladite sur-longueur de fibre optique autour du magasin,
lesdits moyens étant aptes à coopérer pour dérouler une longueur de fibre optique accumulée sur le moyen d'accumulation et pour enrouler ladite sur-longueur autour du magasin.

Selon une forme d'exécution particulièrement avantageuse, lesdits moyens comprennent deux disques coaxiaux accolés, chaque disque comprenant un moyen respectif de pincement de la fibre optique, ledit dispositif comprenant en outre un bras robotisé portant lesdits disques et un dispositif d'entraînement respectif de chaque disque en rotation indépendamment de l'autre disque.

Selon un mode de réalisation, ledit dispositif comprend un moyen d'alignement des disques par rapport à l'orifice de passage du flasque de la bobine.

L'invention concerne également une machine de mise en bobine d'une fibre optique qui comprend un dispositif d'enroulement tel que décrit ci-dessus.

Un autre objet de l'invention concerne un procédé d'enroulement d'une sur-longueur de fibre optique sur une bobine, comme décrit dans la revendication 10, caractérisé en ce qu'il comprend :
- la fourniture d'une bobine telle que décrite plus haut et d'un dispositif d'enroulement tel que décrit ci-dessus, et la mise en place du dispositif en regard de la bobine,
- l'insertion de la fibre optique au travers de l'orifice de passage du fût vers le moyen d'accumulation,
- l'accumulation de la sur-longueur de fibre optique sur ledit moyen d'accumulation,
- l'enroulement, par le moyen d'enroulement, de ladite sur-longueur de fibre optique sur la surface cylindrique du magasin, du côté de la nervure opposé au rebord circonférentiel, le dernier tour de ladite sur-longueur étant positionné entre la nervure et le rebord circonférentiel.

Selon une forme d'exécution préférée, ledit procédé comprend :
- la mise en place du dispositif d'enroulement en regard de la bobine de sorte qu'un premier disque soit accolé au magasin,
- l'insertion de la fibre optique au travers de l'orifice de passage du fût vers les disques,
- le pincement de l'extrémité de la fibre optique contre le second disque,
- l'entraînement dudit second disque en rotation dans un premier sens, le premier disque restant fixe par rapport à la bobine, de sorte à enrouler une sur-longueur de fibre optique sur le second disque,
- l'entraînement des deux disques en rotation dans un second sens opposé au premier, le second disque ayant une vitesse de rotation supérieure à celle du premier disque, de sorte à enrouler ladite sur-longueur de fibre optique sur le magasin, du côté de la nervure opposé au rebord circonférentiel,
- avant l'enroulement du dernier tour de ladite sur-longueur, le décalage des deux disques dans le sens d'un éloignement vis-à-vis de la bobine, de sorte à positionner la sur-longueur de fibre optique restant à enrouler sur le magasin entre la nervure et le rebord circonférentiel,
- la poursuite de la rotation des deux disques de sorte à enrouler le dernier tour de la sur-longueur de fibre optique sur la surface cylindrique du magasin.

### BREVE DESCRIPTION DES DESSINS

D'autres caractéristiques et avantages de l'invention ressortiront de la description détaillée qui va suivre, en référence aux dessins annexés sur lesquels :
- la figure 1A est une vue en perspective d'une bobine de type connu, la figure 1B est une vue en coupe partielle de la bobine de la figure 1A,
- la figure 2A est une vue en perspective d'une bobine conforme à l'invention, la figure 2B est une vue en coupe partielle de la bobine de la figure 2A,
- la figure 3A est une vue en perspective de la bobine des figures 2A et 2B avec la sur-longueur de fibre optique enroulée sur le magasin, la figure 3B est un agrandissement de la figure 3A au niveau de l'ouverture dans le rebord circonférentiel du magasin,
- les figures 4A à 4D illustrent des étapes du procédé d'enroulement automatique d'une sur-longueur de fibre optique sur le magasin.

### DESCRIPTION DETAILLEE DE MODES DE REALISATION DE L'INVENTION

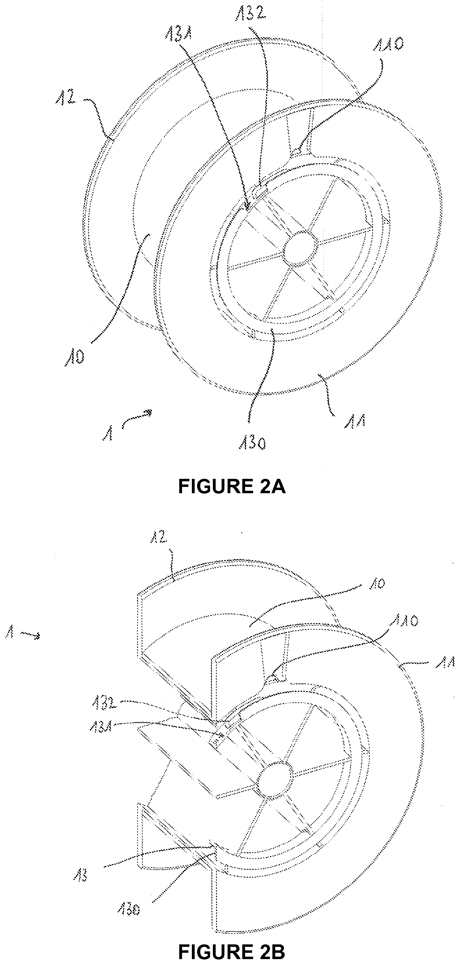

Les figures 2A et 2B sont des vues en perspective d'une bobine selon un mode de réalisation de l'invention.

La bobine 1 comprend un fût 10 cylindrique destiné à recevoir la fibre optique enroulée. De part et d'autre du fût s'étendent radialement deux flasques 11, 12 destinés à retenir la fibre optique dans la direction axiale.

Le flasque 11 est pourvu d'un orifice 110 de passage de la fibre optique. Les dimensions d'un tel orifice sont typiquement de quelques millimètres. L'orifice 110 est de préférence agencé dans le flasque au voisinage du fût 10.

Un magasin 13 présentant une surface cylindrique destinée à recevoir la sur-longueur de fibre enroulée est agencé dans la bobine en étant séparé du fût 10 par le flasque 11.

Par exemple, comme illustré sur la figure 2B, le magasin 13 présente un diamètre inférieur à celui du fût 10 tout en étant coaxial avec celle-ci, et se trouve donc à une distance radiale par rapport à l'axe de la bobine inférieure à celle du fût.

Le magasin 13 présente par ailleurs un rebord circonférentiel 130 dans lequel est ménagée une ouverture 131. Comme cela expliqué en détail plus bas, cette ouverture 131 permet la sortie de l'extrémité de la sur-longueur de fibre optique hors du magasin.

L'ouverture 131 s'étend sur un secteur angulaire limité, typiquement inférieur à 90°, de préférence compris entre 10 et 20°.

De manière avantageuse, le flasque 11 et le rebord 130 s'étendent dans un même plan.

Le magasin 13 comprend en outre une nervure radiale 132 qui s'étend à partir de la surface cylindrique, transversalement à l'axe de rotation de la bobine. Ladite nervure est située axialement en retrait de l'ouverture 131 (c'est-à-dire du côté de l'intérieur de la bobine) et est partiellement en regard de ladite ouverture 131. Par « partiellement en regard », on entend que les secteurs angulaires le long desquels s'étendent respectivement la nervure 132 et l'ouverture 131 sont décalés l'un par rapport à l'autre de sorte à ne se recouvrir que partiellement. Pour un sens d'enroulement inverse, l'ouverture 131 peut être reportée symétriquement par rapport à la nervure 132.

Dans la direction axiale, l'intervalle entre le rebord 130 et la nervure 132 est défini en fonction du diamètre de la fibre de façon à la maintenir et représente une longueur comprise entre 100µm et 400µm. Cet intervalle est conçu pour laisser passer le dernier tour d'enroulement de la sur-longueur. Ainsi, la portion de fibre correspondante est coincée entre le rebord et la nervure, ce qui empêche tout déroulement intempestif, sans qu'il soit nécessaire de recourir à un adhésif ou à un autre moyen de fixation rapporté.

Le magasin 13 peut faire partie intégrante du fût et des flasques, la bobine étant alors monobloc. De manière alternative, le magasin peut se présenter sur la forme d'une pièce distincte qui est ensuite solidarisée sur le fût et/ou les flasques.

Les éléments de la bobine peuvent être réalisés en tout matériau approprié à cet usage, tel qu'un matériau plastique par exemple.

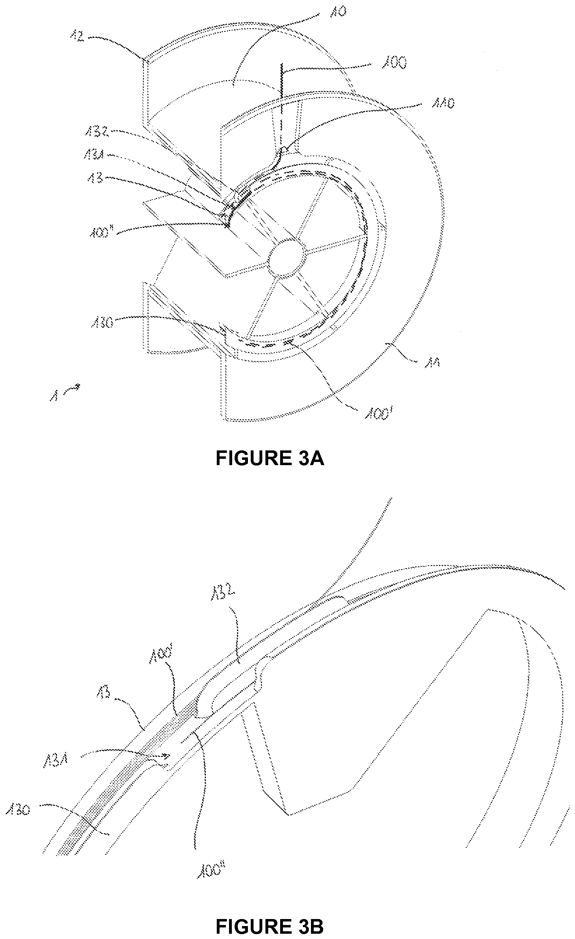

La figure 3A est une vue en coupe partielle de la bobine des figures 2A et 2B avec la sur-longueur 100' de fibre optique enroulée sur le magasin.

Comme on le voit mieux sur la figure 3B, la majeure partie de la sur-longueur 100' de fibre optique est enroulée derrière la nervure 132 (c'est-à-dire du côté intérieur de la bobine par rapport à ladite nervure) ; seul le dernier tour de l'enroulement est coincé entre la nervure 132 et le rebord 130.

L'extrémité 100" de la fibre optique débouche du magasin par l'ouverture 131 et est ainsi aisément accessible en vue d'un prélèvement ultérieur.

Ainsi, pour utiliser la sur-longueur 100' de fibre optique accumulée sur le magasin 13, il suffit de tirer sur l'extrémité 100" et de dérouler la sur-longueur dans le sens opposé à l'enroulement afin d'en prélever une portion à tester.

On va maintenant décrire les différentes étapes d'un enroulement automatique de la sur-longueur de fibre optique sur ladite bobine, ainsi qu'un dispositif automatisé permettant de mettre en oeuvre ce procédé.

Ce dispositif automatisé est installé dans une machine de mise en bobine de fibre optique. Hormis le dispositif automatisé d'enroulement de la sur-longueur de fibre optique, la machine est connue en elle-même et ne sera donc pas décrite en détail dans le présent texte.

La machine comprend un dispositif de préhension de la bobine conçu pour maintenir la bobine par sa partie centrale dans une position déterminée par rapport à un moyen d'amenée d'une fibre optique en défilement. Dans la machine, la bobine est positionnée par rapport à la fibre optique de sorte que la fibre arrive du côté du fût, perpendiculairement à celle-ci.

De manière particulièrement avantageuse, la machine comprend un moyen de guidage de la fibre optique vers l'orifice de passage 110.

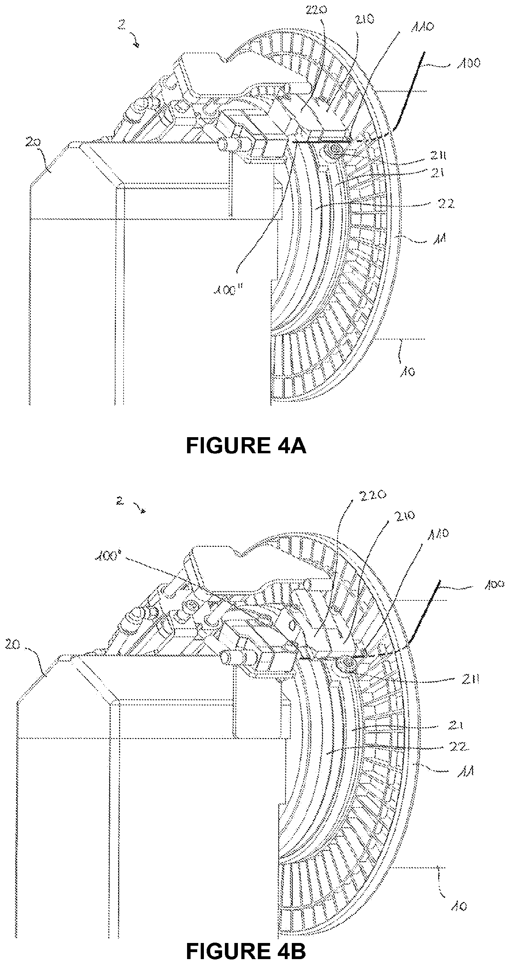

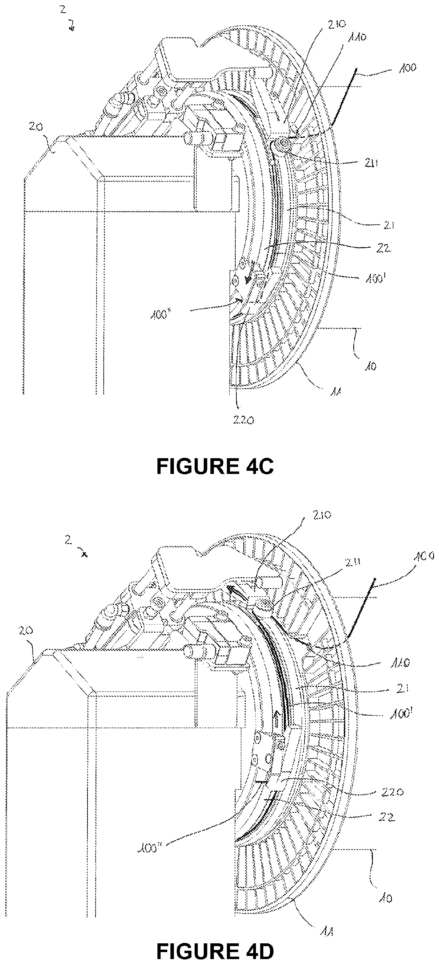

Pendant la mise en oeuvre des étapes d'enroulement de la sur-longueur de fibre optique décrites en référence aux figures 4A à 4D, la bobine reste fixe. De préférence, la bobine est positionnée dans la machine de sorte que l'orifice de passage 110 et l'ouverture 131 dans le rebord circonférentiel du magasin soient dans une position connue et reproductible d'une bobine à l'autre. La bobine peut être pourvue à cet effet d'éléments de centrage et/ou de détrompage (non représentés).

La bobine n'est représentée que de manière partielle sur les figures 4A à 4D où seuls le flasque 11 et une partie du fût 10 sont visibles.

La figure 4A illustre une première étape du procédé, dans laquelle l'extrémité 100" de la fibre optique 100 est insérée au travers de l'orifice de passage 110 du flasque 11, le sens d'introduction étant du fût 10 vers le magasin.

Le dispositif 2 d'enroulement automatisé de la sur-longueur de fibre optique comprend un moyen d'accumulation temporaire de la fibre optique dans une région située du côté du flasque 11 opposé au fût 10 et un moyen d'enroulement de la fibre optique autour de la surface cylindrique du magasin. Ainsi, le dispositif met en oeuvre une séquence d'accumulation de la fibre optique hors de la bobine suivie d'un enroulement de la fibre optique sur le magasin, de sorte qu'à l'issue de l'étape d'enroulement, l'extrémité libre de la fibre optique se trouve sur la partie extérieure de l'enroulement (c'est-à-dire du côté opposé à la surface cylindrique). Ainsi, le prélèvement ultérieur d'une portion de fibre optique est particulièrement aisé sans risque d'endommagement de la fibre.

Selon un mode de réalisation avantageux, le dispositif 2 comprend deux disques coaxiaux 21 et 22.

Comme on le verra en détail plus bas, le disque 21 sert à enrouler la fibre optique sur le magasin, tandis que le disque 22 sert à accumuler temporairement la sur-longueur 100'. Lesdits disques sont supportés par un bras robotisé 20 et possèdent un axe de rotation confondu avec celui de la bobine 1.

Eventuellement, le disque 22 pourrait être remplacé par tout autre moyen permettant d'accumuler de la fibre optique temporairement, cette accumulation pouvant être linéaire ou circulaire dans un plan distinct de celui du disque 21.

Les disques 21, 22 sont accolés, un jeu pouvant être prévu entre lesdits disques pour leur permettre de tourner sans frotter l'un sur l'autre.

Au début du procédé, le bras robotisé 20 amène le disque 21 contre le magasin et le flasque 11.

Le rayon des disques 21, 22 est sensiblement égal à la distance entre l'axe de la bobine et l'orifice de passage 110 ménagé dans le flasque 11. Ainsi, lorsque la fibre optique est insérée au travers de l'orifice 110, elle arrive sensiblement en affleurement de la surface circonférentielle des disques 21, 22.

Les disques 21, 22 possèdent chacun un dispositif d'entraînement en rotation respectif (non représenté car interne au bras 20), de sorte que les disques 21, 22 peuvent être entraînés en rotation indépendamment l'un de l'autre, dans le même sens ou dans des sens opposés, à la même vitesse ou à des vitesses différentes.

Chaque disque 21, 22 est pourvu d'un moyen de pincement respectif d'une extrémité 100" de la fibre optique contre la surface circonférentielle du disque.

Ledit moyen de pincement peut comprendre un doigt 210, respectivement 220, apte à pivoter entre une position relevée où le doigt est distant de la surface circonférentielle du disque et une position abaissée où le doigt est en contact avec la surface circonférentielle du disque, de manière à pincer une portion de fibre passant entre le doigt et la surface.

Le disque 21, qui est le disque le plus proche de la bobine 1, présente sur sa surface circonférentielle un plot de guidage 211 agencé en regard du doigt de pincement 210. Ce plot de guidage 211 présente typiquement une forme cylindrique et sert ainsi de surface d'appui à la fibre sur un secteur angulaire de 90° entre l'orifice 110 et la surface circonférentielle du disque 21 sur lequel elle doit s'enrouler (cf. figure 4B).

Le bras robotisé comprend avantageusement un moyen d'alignement des doigts 210, 220 par rapport à l'orifice de passage 110. Ce moyen d'alignement peut notamment comprendre un capteur de position de chacun des disques et un système de commande configuré pour actionner les moyens d'entraînement en rotation des disques 21, 22 dans la position requise par rapport à l'orifice 110.

La figure 4B illustre une deuxième étape du procédé, dans laquelle, l'extrémité 100" de la fibre optique ayant été insérée au travers de l'orifice 110, on actionne les moyens de pincement de sorte à pincer l'extrémité 100" de la fibre optique entre les doigts 210, 220 et la surface circonférentielle des disques 21, 22. Le doigt 220 maintient l'extrémité de la fibre optique lors de la rotation du disque 22. Le doigt 210 exerce une pression légère permettant à la fibre optique d'être tendue lors de l'enroulement.

En référence à la figure 4C, on entraîne ensuite en rotation le disque 22, qui est le disque le plus éloigné de la bobine. Le sens de rotation est indiqué par la double flèche.

L'extrémité 100" de la fibre optique étant solidaire du disque 22 en rotation, la sur-longueur 100' de fibre optique s'enroule progressivement sur la surface circonférentielle du disque 22. Le disque 21 reste fixe pendant cette étape du procédé.

Le nombre de tours parcourus par le disque 22 correspond sensiblement à la longueur de la sur-longueur de fibre optique à enrouler sur le magasin.

Une fois que le nombre de tours requis a été effectué, la rotation du disque 22 est stoppée et le disque 21 est entraîné en rotation dans le sens (indiqué par la double flèche sur la figure 4C) contraire au sens dans lequel tournait précédemment le disque 22. Dans cette étape, les disques 21 et 22 tournent dans le même sens mais à des vitesses différentes, le disque 22 le plus éloigné de la bobine tournant plus vite que le disque 21 le plus proche de la bobine. Dans cette étape, la sur-longueur 100' de fibre optique qui avait été accumulée sur le disque 22 à l'étape précédente est enroulée progressivement sur le magasin 13, du côté de la nervure 132 opposé au rebord circonférentiel 130.

A la fin de l'avant-dernier tour d'enroulement, l'ensemble des disques 21 et 22 est décalé axialement dans le sens d'un éloignement vis-à-vis de la bobine. La distance de décalage correspond sensiblement à l'épaisseur de la nervure 132, ce qui a pour effet de positionner la sur-longueur de fibre optique restant à enrouler entre la nervure 132 et le rebord circonférentiel 130 du magasin.

Les disques 21 et 22 effectuent alors un dernier tour, en conservant le même sens et la même vitesse de rotation qu'avant ce décalage.

La rotation des disques est stoppée lorsque l'extrémité 100" de la fibre optique arrive en regard de l'ouverture 131, ladite extrémité étant retenue entre la nervure 132 et le rebord circonférentiel 130.

Le bras 20 et les disques 21, 22 sont alors éloignés de la bobine.

Puis la bobine est mise en rotation et l'enroulement de la fibre optique sur le fût 10 débute, selon un procédé conventionnel.

## Revendications

1. Dispositif (2) d'enroulement d'une sur-longueur (100') de fibre optique sur une bobine (1) comprenant :
- un fût (10) cylindrique,
- deux flasques (11, 12) s'étendant radialement à chaque extrémité du fût (10), l'un (11) des flasques étant pourvu d'un orifice (110) de passage de la fibre optique,
- un magasin (13) présentant une surface cylindrique destinée à recevoir un enroulement de ladite sur-longueur (100') de fibre optique, ledit magasin étant séparé du fût (10) par le flasque (11) pourvu de l'orifice (110) de passage et présentant un rebord (130) circonférentiel de retenue de ladite sur-longueur de fibre optique,
ledit dispositif étant **caractérisé en ce qu'**il comprend :
- un moyen (22) d'accumulation de ladite sur-longueur de fibre optique,
- un moyen (21) d'enroulement, autour du magasin (13), de ladite sur-longueur de fibre optique,
lesdits moyens (21, 22) étant aptes à coopérer pour dérouler une longueur de fibre optique accumulée sur le moyen d'accumulation (22) et pour enrouler ladite sur-longueur autour du magasin (13).

2. Dispositif selon la revendication 1, **caractérisé en ce que** lesdits moyens (22, 21) comprennent deux disques coaxiaux accolés, chaque disque (21, 22) comprenant un moyen respectif (210, 220) de pincement de la fibre optique, ledit dispositif (2) comprenant en outre un bras robotisé (20) portant lesdits disques et un dispositif d'entraînement respectif de chaque disque (21, 22) en rotation indépendamment de l'autre disque.

3. Dispositif selon l'une des revendications 1 ou 2, **caractérisé en ce qu'**il comprend un moyen d'alignement des disques (21, 22) par rapport à l'orifice (110) de passage du flasque (11) de la bobine.

4. Machine de mise en bobine de fibre optique comprenant un dispositif d'enroulement (2) selon l'une des revendications 1 à 3.

5. Bobine (1) destinée à l'enroulement d'une fibre optique (100), comprenant :
- un fût (10) cylindrique destiné à recevoir la fibre optique,
- deux flasques (11, 12) s'étendant radialement à chaque extrémité du fût (10), l'un (11) des flasques étant pourvu d'un orifice (110) de passage de la fibre optique,
- un magasin (13) présentant une surface cylindrique destinée à recevoir un enroulement d'une sur-longueur (100') de fibre optique, ledit magasin étant séparé du fût (10) par le flasque (11) pourvu de l'orifice (110) de passage et présentant un rebord (130) circonférentiel de retenue de ladite sur-longueur de fibre optique,
ledit rebord (130) circonférentiel présentant une ouverture (131) et ladite bobine étant **caractérisée en ce que** le magasin (13) présente une nervure (132) s'étendant radialement sur une partie de la circonférence de la surface cylindrique située axialement en retrait de l'ouverture (131) du côté de l'intérieur de la bobine, ladite nervure (132) s'étendant partiellement en regard de ladite ouverture (130), de sorte à maintenir une spire de la sur-longueur (100') de fibre optique entre le rebord circonférentiel (130) et la nervure (132).

6. Bobine selon la revendication 5, **caractérisée en ce que** la distance entre le rebord circonférentiel (130) et la nervure (132) est comprise entre 100µm et 400µm.

7. Bobine selon l'une des revendications 5 ou 6, **caractérisée en ce que** le magasin (13) est distinct du fût et solidaire dudit fût.

8. Bobine selon l'une des revendications 5 ou 6, **caractérisée en ce que** l'ensemble du fût, des flasques et du magasin est constitué d'une seule pièce.

9. Bobine selon l'une des revendications 5 à 8, **caractérisée en ce qu'**elle comprend une fibre optique (100) enroulée sur le fût (10) et une sur-longueur (100') de ladite fibre optique enroulée sur la surface cylindrique du magasin (13), l'extrémité (100") de ladite sur-longueur s'étendant entre la nervure (132) et le rebord circonférentiel (130) et débouchant par l'ouverture (131).

10. Procédé d'enroulement d'une sur-longueur (100') de fibre optique sur une bobine, **caractérisé en ce qu'**il comprend :
- la fourniture d'une bobine (1) selon l'une des revendications 5 à 8 et d'un dispositif (2) d'enroulement selon l'une des revendications 1 à 3, et la mise en place du dispositif (2) en regard de la bobine (1),
- l'insertion de la fibre optique (100) au travers de l'orifice de passage (110) du fût (10) vers le moyen (22) d'accumulation,
- l'accumulation de la sur-longueur de fibre optique sur ledit moyen d'accumulation (22),
- l'enroulement, par le moyen d'enroulement (21), de ladite sur-longueur de fibre optique sur la surface cylindrique du magasin (13), du côté de la nervure (132) opposé au rebord circonférentiel (130), le dernier tour de ladite sur-longueur étant positionné entre la nervure (132) et le rebord circonférentiel (130).

11. Procédé selon la revendication 10, utilisant un dispositif d'enroulement selon la revendication 2, comprenant :
- la mise en place du dispositif (2) en regard de la bobine de sorte qu'un premier disque (21) soit accolé au magasin (13),
- l'insertion de la fibre optique (100) au travers de l'orifice de passage (110) du fût (10) vers les disques (21, 22),
- le pincement de l'extrémité (100") de la fibre optique contre le second disque (22),
- l'entraînement dudit second disque (22) en rotation dans un premier sens, le premier disque restant fixe par rapport à la bobine (1), de sorte à enrouler une sur-longueur de fibre optique sur le second disque (22),
- l'entraînement des deux disques (21, 22) en rotation dans un second sens opposé au premier, le second disque (22) ayant une vitesse de rotation supérieure à celle du premier disque (21), de sorte à enrouler ladite sur-longueur de fibre optique sur la surface cylindrique du magasin (13), du côté de la nervure (132) opposé au rebord circonférentiel (130),
- avant l'enroulement du dernier tour de ladite sur-longueur, le décalage des deux disques (21, 22) dans le sens d'un éloignement vis-à-vis de la bobine, de sorte à positionner la sur-longueur de fibre optique restant à enrouler sur le magasin (13) entre la nervure (132) et le rebord circonférentiel (130),
- la poursuite de la rotation des deux disques (21, 22) de sorte à enrouler le dernier tour de la sur-longueur (100') de fibre optique sur le magasin (13).

## Patentansprüche

1. Vorrichtung (2) zum Wickeln einer Überlänge (100') einer Glasfaser auf eine Spule (1), umfassend:
- einen zylindrischen Schaft (10),
- zwei Flansche (11, 12), die sich radial an jedem Ende des Schaftes (10) erstrecken, wobei der eine (11) der Flansche mit einer Öffnung (110) zum Durchführen der Glasfaser versehen ist,
- ein Magazin (13), das eine zylindrische Oberfläche aufweist, die dazu bestimmt ist, eine Wicklung der Überlänge (100') einer Glasfaser zu empfangen, wobei das Magazin von dem Schaft (10) durch den Flansch (11) getrennt ist, der mit der Öffnung (110) zum Durchführen versehen ist, und einen umlaufenden Rückhalterand (130) für die Überlänge einer Glasfaser aufweist,
wobei die Vorrichtung **dadurch gekennzeichnet ist, dass** sie umfasst:
- ein Mittel (22) zum Ansammeln der Überlänge einer Glasfaser,
- ein Mittel (21)) zum Wickeln der Überlänge einer Glasfaser um das Magazin (13),
wobei die Mittel (21, 22) imstande sind, zusammenzuwirken, um eine Länge einer Glasfaser, die auf dem Mittel zum Ansammeln (22) angesammelt ist, abzuwickeln, und um die Überlänge um das Magazin (13) zu wickeln.

2. Vorrichtung nach Anspruch 1, **dadurch gekennzeichnet, dass** die Mittel (22, 21) zwei anliegende koaxiale Scheiben umfassen, wobei jede Scheibe (21, 22) ein jeweiliges Mittel (210, 220) zum Klemmen der Glasfaser umfasst, wobei die Vorrichtung (2) weiter einen Roboterarm (20) umfasst, der die Scheiben und eine jeweilige Vorrichtung zum Antreiben einer jeden Scheibe (21, 22) in Drehung unabhängig von der anderen Scheibe trägt.

3. Vorrichtung nach einem der Ansprüche 1 oder 2, **dadurch gekennzeichnet, dass** sie ein Mittel zum Ausrichten der Scheiben (21, 22) im Verhältnis zur Öffnung (110) zum Durchführen des Flansches (11) der Spule umfasst.

4. Maschine zum Aufspulen einer Glasfaser, eine Vorrichtung zum Wickeln (2) nach einem der Ansprüche 1 bis 3 umfassend.

5. Spule (1), die zum Wickeln einer Glasfaser (100) bestimmt ist, umfassend:
- einen zylindrischen Schaft (10), der dazu bestimmt ist, die Glasfaser zu empfangen,
- zwei Flansche (11, 12), die sich radial an jedem Ende des Schaftes (10) erstrecken, wobei der eine (11) der Flansche mit einer Öffnung (110) zum Durchführen der Glasfaser versehen ist,
- ein Magazin (13), das eine zylindrische Oberfläche aufweist, die dazu bestimmt ist, eine Wicklung einer Überlänge (100') einer Glasfaser zu empfangen, wobei das Magazin von dem Schaft (10) durch den Flansch (11) getrennt ist, der mit der Öffnung (110) zum Durchführen versehen ist, und einen umlaufenden Rückhalterand (130) für die Überlänge einer Glasfaser aufweist,
wobei der umlaufende Rand (130) eine Bohrung (131) aufweist und die Spule **dadurch gekennzeichnet ist, dass** das Magazin (13) eine Rippe (132) aufweist, die sich radial über einen Teil des Umfangs der zylindrischen Oberfläche erstreckt, die sich axial versenkt zu der Bohrung (131) auf Seiten des Inneren der Spule befindet,
wobei sich die Rippe (132) teilweise gegenüber der Bohrung (130) erstreckt, um eine Windung der Überlänge (100') einer Glasfaser zwischen dem umlaufenden Rand (130) und der Rippe (132) zu halten.

6. Spule nach Anspruch 5, **dadurch gekennzeichnet, dass** der Abstand zwischen dem umlaufenden Rand (130) und der Rippe (132) zwischen 100 µm und 400 µm enthalten ist.

7. Spule nach einem der Ansprüche 5 oder 6, **dadurch gekennzeichnet, dass** das Magazin (13) separat vom Schaft, und fest mit dem Schaft verbunden ist.

8. Spule nach einem der Ansprüche 5 oder 6, **dadurch gekennzeichnet, dass** die Einheit des Schafts, der Flansche und des Magazins aus einem einzigen Stück besteht.

9. Spule nach einem der Ansprüche 5 bis 8, **dadurch gekennzeichnet, dass** sie eine Glasfaser (100) umfasst, die auf den Schaft (10) gewickelt ist, und eine Überlänge (100') der Glasfaser, die auf die zylindrische Oberfläche des Magazins (13) gewickelt ist, wobei sich das Ende (100") der Überlänge zwischen der Rippe (132) und dem umlaufenden Rand (130) erstreckt, und durch die Bohrung (131) mündet.

10. Verfahren zum Wickeln einer Überlänge (100') einer Glasfaser auf eine Spule, **dadurch gekennzeichnet, dass** es umfasst:
- Bereitstellen einer Spule (1) nach einem der Ansprüche 5 bis 8, und einer Vorrichtung (2) zum Wickeln nach einem der Ansprüche 1 bis 3, und Einsetzen der Vorrichtung (2) gegenüber der Spule (1),
- Einführen der Glasfaser (100) durch die Durchführungsöffnung (110) des Schafts (10) hindurch zu dem Mittel zum Ansammeln (22),
- Ansammeln der Überlänge einer Glasfaser auf dem Mittel zum Ansammeln (22),
- Wickeln der Überlänge einer Glasfaser durch das Mittel zum Wickeln (21) auf die zylindrische Oberfläche des Magazins (13) auf Seiten der Rippe (132) gegenüber dem umlaufenden Rand (130), wobei die letzte Umdrehung der Überlänge zwischen der Rippe (132) und dem umlaufenden Rand (130) positioniert ist.

11. Verfahren nach Anspruch 10, unter Verwendung einer Vorrichtung zum Wickeln nach Anspruch 2, umfassend:
- Anbringen der Vorrichtung (2) gegenüber der Spule, sodass eine erste Scheibe (21) am Magazin (13) anliegt,
- Einführen der Glasfaser (100) durch die Durchführungsöffnung (110) des Schaftes (10) hindurch zu den Scheiben (21, 22),
- Klemmen des Endes (100") der Glasfaser gegen die zweite Scheibe (22),
- Antreiben der zweiten Scheibe (22) in Drehung in eine erste Richtung, wobei die erste Scheibe in Bezug zu der Spule (1) feststehend bleibt, um eine Überlänge einer Glasfaser auf die zweite Scheibe (22) zu wickeln,
- Antreiben der beiden Scheiben (21, 22) in Drehung in eine zweite Richtung entgegengesetzt zur ersten, wobei die zweite Scheibe (22) eine Drehgeschwindigkeit hat, die größer ist als jene der ersten Scheibe (21), um die Überlänge einer Glasfaser auf die zylindrische Oberfläche des Magazins (13) auf Seiten der Rippe (132) gegenüber dem umlaufenden Rand (130) zu wickeln,
- vor dem Wickeln der letzten Umdrehung der Überlänge Versetzen der beiden Scheiben (21, 22) in die Richtung einer Entfernung gegenüber der Spule, um die Überlänge einer Glasfaser, die noch auf das Magazin (13) zu wickeln bleibt, zwischen der Rippe (132) und dem umlaufenden Rand (130) zu positionieren,
- Fortsetzen der Drehung der beiden Scheiben (21, 22), um die letzte Umdrehung der Überlänge (100') einer Glasfaser auf das Magazin (13) zu wickeln.

## Claims

1. Device (2) for winding an excess length (100') of optical fibre onto a bobbin (1) comprising:
- a cylindrical reel (10),
- two rims (11, 12) extending radially from each end of the reel (10), one (11) of the rims being provided with a port (110) for the optical fibre,
- a magazine (13) that has a cylindrical surface intended to receive a winding of said excess length (100') of optical fibre, said magazine being separated from the reel (10) by the rim (11) provided with the port (110) and having a circumferential edge (130) for retaining said excess length of optical fibre,
said device being **characterised in that** it comprises:
- means (22) for storing said excess length of optical fibre,
- means (21) for winding said excess length of optical fibre about the magazine (13),
said means (21, 22) being able to cooperate to unwind a length of optical fibre stored on the storage means (22) and to wind said excess length about the magazine (13).

2. Device according to claim 1, **characterised in that** said means (22, 21) comprise two coaxial adjacent discs, each disc (21, 22) comprising respective means (210, 220) for clamping the optical fibre, said device (2) further comprising a robotic arm (20) holding said discs and a device for respectively rotating each disc (21, 22) independently of the other disc.

3. Device according to one of the claims 1 or 2, **characterised in that** it comprises means for aligning the discs (21, 22) in relation to the port (110) of the rim (11) of the bobbin.

4. Machine for placing an optical fibre in the bobbin, comprising a winding device (2) according to one of the claims 1 to 3.

5. Bobbin (1) intended to wind an optical fibre (100), comprising:
- a cylindrical reel (10) intended to receive the optical fibre,
- two rims (11, 12) extending radially from each end of the reel (10), one (11) of the rims being provided with a port (110) for the optical fibre,
- a magazine (13) that has a cylindrical surface intended to receive a winding of an excess length (100') of optical fibre, said magazine being separated from the reel (10) by the rim (11) provided with the port (110) and having a circumferential edge (130) for retaining said excess length of optical fibre,
said circumferential edge (130) having an opening (131) and said bobbin being **characterised in that** the magazine (13) has a rib (132) extending radially over a part of the circumference of the cylindrical surface, set back axially from the opening (131) of the internal side of the bobbin, said rib (132) partially extending facing said opening (130), so as to hold a loop of the excess length (100') of optical fibre between the circumferential edge (130) and the rib (132).

6. Bobbin according to claim 5, **characterised in that** the distance between the circumferential edge (130) and the rib (132) is between 100µm and 400µm.

7. Bobbin according to one of the claims 5 or 6, **characterised in that** the magazine (13) is separate from the reel and connected to said reel.

8. Bobbin according to one of the claims 5 or 6, **characterised in that** the whole of the reel, the rims and the magazine is constituted from one single piece.

9. Bobbin according to one of the claims 5 to 8, **characterised in that** it comprises an optical fibre (100) wound onto the reel (10) and an excess length (100') of said optical fibre wound onto the cylindrical surface of the magazine (13), the end (100") of said excess length extending between the rib (132) and the circumferential edge (130) and passing through the opening (131).

10. Method for winding an excess length (100') of optical fibre onto a bobbin, **characterised in that** it comprises:
- providing a bobbin (1) according to one of the claims 5 to 8 and a winding device (2) according to one of the claims 1 to 3, and positioning the device (2) facing the bobbin (1),
- inserting the optical fibre (100) through the port (110) of the reel (10) towards the storage means (22),
- storing the excess length of optical fibre on said storage means (22),
- winding, by the winding means (21), said excess length of optical fibre onto the cylindrical surface of the magazine (13), on the side of the rib (132) opposite to the circumferential edge (130), the last turn of said excess length being positioned between the rib (132) and the circumferential edge (130).

11. Method according to claim 10, using a winding device according to claim 2, comprising:
- positioning the device (2) facing the bobbin so that a first disc (21) is adjacent to the magazine (13),
- inserting the optical fibre (100) through the port (110) of the reel (10) towards the discs (21, 22),
- clamping the end (100") of the optical fibre against the second disc (22),
- rotating said second disc (22) in a first direction, the first disc remaining fixed in relation to the bobbin (1), so as to wind an excess length of optical fibre onto the second disc (22),
- rotating the two discs (21, 22) in a second direction, opposite to the first direction, the second disc (22) having a rotating speed greater than that of the first disc (21), so as to wind said excess length of optical fibre onto the cylindrical surface of the magazine (13), on the side of the rib (132), opposite the circumferential edge (130),
- before the winding of the last turn of said excess length, offsetting the two discs (21, 22) in a direction remote from the bobbin, so as to position the excess length of remaining optical fibre to be wound onto the magazine (13) between the rib (132) and the circumferential edge (130),
- further rotating the two discs (21, 22), so as to wind the last turn of the excess length (100') of optical fibre onto the magazine (13).
